# EUROPÄISCHE PATENTSCHRIFT

(11) **EP 3 402 706 B1**
(45) Veröffentlichungstag und Bekanntmachung des Hinweises auf die Patenterteilung: **12.04.2023**
(21) Anmeldenummer: 17701432.1
(22) Anmeldetag: 13.01.2017
(51) Int. Cl.: B60T 13/68, B60T 15/02

(54) **STEUERVORRICHTUNG ZUM STEUERN EINER BREMSANLAGE FÜR EIN FAHRZEUG, BREMSANLAGE FÜR EIN FAHRZEUG, VERFAHREN ZUM BEAUFSCHLAGEN ZUMINDEST EINER BREMSEINRICHTUNG EINER BREMSANLAGE FÜR EIN FAHRZEUG MIT EINEM BREMSDRUCK**
CONTROL UNIT FOR CONTROLLING A VEHICULAR BRAKE SYSTEM, BRAKE SYSTEM FOR A VEHICLE, METHOD TO SUPPLY A BRAKE SYSTEM WITH BRAKING PRESSURE
UNITÉ DE CONTROL POUR CONTRÔLER UN SYSTÈME DE FREINS DE UN VÉHICULE, SYSTÈME DE FREINS DE VÉHICULE, PROCÈDE DE LIVRAISON DE PRESSION DE FREINAGE POUR UN SYSTÈME DE FREINS

(30) Priorität: 14.01.2016 DE 102016100526
(43) Veröffentlichungstag der Anmeldung: 21.11.2018
(73) Patentinhaber: KNORR-BREMSE Systeme für Nutzfahrzeuge GmbH, 80809 München (DE)
(72) Erfinder: HECKER, Falk, 71706 Markgröningen (DE); RÖTHER, Friedbert, 74389 Cleebronn (DE)
(86) Internationale Anmeldenummer: PCT/EP2017/050663
(87) Internationale Veröffentlichungsnummer: WO 2017/121849

(56) Entgegenhaltungen:
- EP-A2- 1 036 718
- EP-A2- 1 923 284
- DE-A1-102013 107 805

## Beschreibung

Die vorliegende Erfindung bezieht sich auf eine Steuervorrichtung zum Steuern einer Bremsanlage für ein Fahrzeug, auf eine Bremsanlage für ein Fahrzeug, auf ein Verfahren zum Betreiben einer Steuervorrichtung, auf ein entsprechendes Steuergerät sowie auf ein Verfahren zum Beaufschlagen zumindest einer Bremseinrichtung einer Bremsanlage für ein Fahrzeug mit einem Bremsdruck.

Eine pneumatische Bremsanlage für ein Nutzfahrzeug kann einen Vorratsbehälter zum Bereitstellen eines Vorratsdrucks umfassen. Dieser Vorratsdruck kann beispielsweise mittels eines Druckbegrenzers auf einen geeigneten Betriebsdruck zum Betreiben der Bremsanlage reduziert werden.

Die Druckschrift EP 1 036 718 A offenbart eine hydraulische Bremsanlage.

Die Druckschrift EP 1 923 284 A offenbart eine Streckbremseinrichtung für Kraftfahrzeuge.

Die Druckschrift DE 102013107805 A offenbart ein Bremssteuerungssystem einer mobilen Arbeitsmaschine, insbesondere eines Flurförderzeugs.

Vor diesem Hintergrund werden mit dem hier vorgestellten Ansatz eine Steuervorrichtung zum Steuern einer Bremsanlage für ein Fahrzeug, eine Bremsanlage für ein Fahrzeug, sowie schließlich ein Verfahren zum Beaufschlagen zumindest einer Bremseinrichtung einer Bremsanlage für ein Fahrzeug mit einem Bremsdruck gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird eine Steuervorrichtung zum Steuern einer Bremsanlage für ein Fahrzeug vorgestellt, wobei die Steuervorrichtung folgende Merkmale aufweist:
ein (beispielsweise elektrisch) ansteuerbares Steuerventil zum Beaufschlagen der Bremsanlage mit einem Bremsdruck;
einen Druckbehälteranschluss zum Anschließen der Steuervorrichtung an einen Druckbehälter zum Bereitstellen eines Vorratsdrucks; und
ein zwischen dem Steuerventil und dem Druckbehälteranschluss angeordnetes Druckbegrenzungsventil zum Begrenzen des Vorratsdrucks auf den Bremsdruck.

Unter einer Bremsanlage kann beispielsweise eine pneumatisch oder hydraulisch oder sowohl pneumatisch als auch hydraulisch betätigbare Bremsanlage verstanden werden. Bei dem Fahrzeug kann es sich etwa um ein Nutzfahrzeug oder ein Schienenfahrzeug handeln. Bei dem Steuerventil kann es sich beispielsweise um ein Wegeventil mit zumindest zwei Schaltstellungen handeln. Insbesondere kann das Steuerventil als Magnetventil mit zumindest einer Spule ausgeführt sein. Hierbei kann das Steuerventil etwa Teil einer Relaiseinheit sein. Unter einem Bremsdruck kann ein Betriebsdruck zum Betätigen der Bremsanlage verstanden werden. Bei dem Druckbegrenzungsventil kann es sich beispielsweise um ein Sperr- oder Druckventil handeln. Insbesondere kann das Druckbegrenzungsventil als Rückschlagventil realisiert sein.

Der hier vorgestellte Ansatz beruht auf der Erkenntnis, dass eine Bremsanlage für ein Fahrzeug durch Kombinieren eines beispielsweise elektrisch ansteuerbaren Steuerventils mit einem Druckbegrenzungsventil automatisch mit einem reduzierten Bremsdruck angesteuert werden kann. Somit kann die Bremsanlage in Verbindung mit Vorratsbehältern, die mit hohen Drücken befüllt sind, verwendet werden. Dies hat wiederum den Vorteil, dass die Vorratsbehälter klein und entsprechend platzsparend ausgeführt werden können.

Gemäß einer Ausführungsform kann das Druckbegrenzungsventil als Rückschlagventil, insbesondere als federbelastetes Rückschlagventil, realisiert sein. Dadurch kann das Druckbegrenzungsventil besonders kostengünstig bereitgestellt werden.

Ferner ist es vorteilhaft, wenn das Steuerventil als Magnetventil, insbesondere als federrückgestelltes Magnetventil, realisiert ist. Dadurch kann das Steuerventil möglichst verschleißfest ausgeführt werden.

Gemäß einer weiteren Ausführungsform kann die Steuervorrichtung einen Bremseinrichtungsanschluss zum Anschließen der Steuervorrichtung an zumindest eine Bremseinrichtung der Bremsanlage aufweisen. Das Druckbegrenzungsventil kann einen Steuerventilanschluss zum Anschließen des Druckbegrenzungsventils an das Steuerventil aufweisen. Hierbei kann das Steuerventil ausgebildet sein, um den Steuerventilanschluss und den Bremseinrichtungsanschluss in einer Arbeitsstellung fluidisch miteinander zu verbinden. Zusätzlich oder alternativ kann das Steuerventil ausgebildet sein, um den Steuerventilanschluss und den Bremseinrichtungsanschluss in einer Ruhestellung fluidisch voneinander zu trennen. Dadurch kann die Bremsanlage mit geringem mechanischem Aufwand betätigt werden.

Zudem ist es von Vorteil, wenn das Steuerventil ausgebildet ist, um in der Ruhestellung den Steuerventilanschluss zu sperren. Zusätzlich oder alternativ kann das Steuergerät ausgebildet sein, um in der Ruhestellung den Bremseinrichtungsanschluss freizugeben. Dadurch kann die Zuverlässigkeit der Steuervorrichtung erhöht werden.

Gemäß einer weiteren Ausführungsform kann die Steuervorrichtung einen Betätigungseinrichtungsanschluss zum Anschließen der Steuervorrichtung an eine Betätigungseinrichtung zum Betätigen der Bremsanlage durch einen Fahrer des Fahrzeugs aufweisen. Hierbei kann das Steuerventil ausgebildet sein, um den Betätigungseinrichtungsanschluss und den Bremseinrichtungsanschluss in der Ruhestellung fluidisch miteinander zu verbinden. Zusätzlich oder alternativ kann das Steuerventil ausgebildet sein, um den Betätigungseinrichtungsanschluss und den Bremseinrichtungsanschluss in der Arbeitsstellung fluidisch voneinander zu trennen. Unter einer Betätigungseinrichtung kann beispielsweise ein Bremspedal oder ein Bremshebel verstanden werden. Dadurch kann die Steuervorrichtung mit der Betätigungseinrichtung gekoppelt werden.

Des Weiteren kann das Steuerventil ausgebildet sein, um den Betätigungseinrichtungsanschluss in der Arbeitsstellung zu sperren. Dadurch kann ein Beaufschlagen der Bremseinrichtung mit dem Bremsdruck mittels der Betätigungseinrichtung verhindert werden, wenn die Bremseinrichtung über das Druckbegrenzungsventil mit dem Bremsdruck beaufschlagt wird.

Der hier vorgeschlagene Ansatz schafft ferner eine Bremsanlage für ein Fahrzeug, wobei die Bremsanlage folgende Merkmale aufweist:
zumindest einen Druckbehälter zum Bereitstellen eines Vorratsdrucks; und
eine an den Druckbehälter angeschlossene Steuervorrichtung gemäß einer der vorstehenden Ausführungsformen.

Zudem schafft der hier beschriebene Ansatz ein Verfahren zum Beaufschlagen zumindest einer Bremseinrichtung einer Bremsanlage für ein Fahrzeug mit einem Bremsdruck, wobei die Bremsanlage eine Steuervorrichtung mit einem elektrisch ansteuerbaren Steuerventil, einem Druckbehälteranschluss zum Anschließen der Steuervorrichtung an einen Druckbehälter und einem zwischen dem Steuerventil und dem Druckbehälteranschluss angeordneten Druckbegrenzungsventil aufweist, wobei das Verfahren folgende Schritte umfasst:
Bereitstellen eines Vorratsdrucks an dem Druckbehälteranschluss;
Begrenzen des Vorratsdrucks auf den Bremsdruck durch das Druckbegrenzungsventil; und
Ansteuern des Steuerventils, um die Bremseinrichtung mit dem Bremsdruck zu beaufschlagen.

Ausführungsbeispiele der Erfindung sind in den Zeichnungen dargestellt und in der nachfolgenden Beschreibung näher erläutert. Es zeigt:
Fig. 1 eine schematische Darstellung einer Bremsanlage gemäß einem Ausführungsbeispiel;
Fig. 2 eine schematische Darstellung eines Steuergeräts gemäß einem Ausführungsbeispiel;
Fig. 3 ein Ablaufdiagramm eines Verfahrens zum Betreiben einer Steuervorrichtung gemäß einem Ausführungsbeispiel; und
Fig. 4 ein Ablaufdiagramm eines Ausführungsbeispiels eines Verfahrens zum Beaufschlagen zumindest einer Bremseinrichtung einer Bremsanlage mit einem Bremsdruck.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

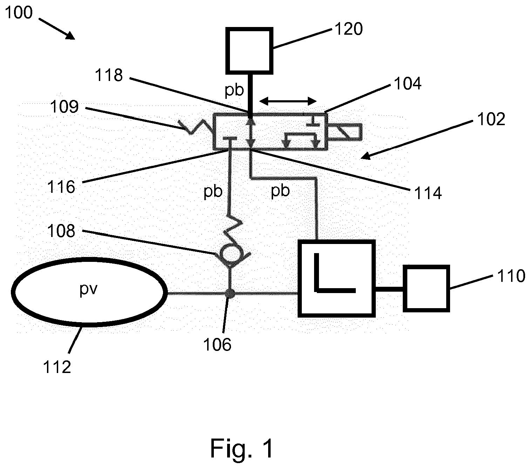

**Fig. 1** zeigt eine schematische Darstellung einer Bremsanlage 100 gemäß einem Ausführungsbeispiel der vorliegenden Erfindung. Die Bremsanlage 100 ist ausgebildet, um ein Fahrzeug, insbesondere ein Nutzfahrzeug, zu bremsen. Die Bremsanlage 100 umfasst eine Steuervorrichtung 102 mit einem elektrisch ansteuerbaren Steuerventil 104, einen Druckbehälteranschluss 106 sowie einen zwischen dem Steuerventil 104 und dem Druckbehälteranschluss 106 angeordneten Druckbegrenzungsventil 108. Das Steuerventil 104, hier ein mittels einer Feder 109 rückstellbares Magnetventil, ist ausgebildet, um einen Bremsdruck pb an eine Bremseinrichtung 110 der Bremsanlage 100 weiterzuleiten. Bei dem Steuerventil 104 handelt es sich beispielsweise um ein Relaisventil zur Antischlupfregelung. Bei der Bremseinrichtung 110 handelt es sich beispielsweise um ein ABS-Ventil oder einen Bremszylinder. Der Druckbehälteranschluss 106 dient zum Anschließen eines Druckbehälters 112 an die Steuervorrichtung 102. Über den Druckbehälteranschluss 106 ist die Steuervorrichtung 102 mit einem durch den Druckbehälter 112 bereitgestellten Vorratsdruck pv beaufschlagbar. Das Druckbegrenzungsventil 108, hier ein federbelastetes Rückschlagventil, ist ausgebildet, um den am Druckbehälteranschluss 106 anliegenden Vorratsdruck pv auf den Bremsdruck pb zu reduzieren. Das Steuerventil 104 kann somit über das Druckbegrenzungsventil 108 mit dem Bremsdruck pb beaufschlagt werden.

Gemäß diesem Ausführungsbeispiel ist die Steuervorrichtung 102 mit einem Bremseinrichtungsanschluss 114 realisiert, über den die Steuervorrichtung 102 an die Bremseinrichtung 110 angeschlossen ist. Ebenso ist das Druckbegrenzungsventil 108 mit einem Steuerventilanschluss 116 realisiert, über den das Druckbegrenzungsventil 108 an das Steuerventil 104 angeschlossen ist. Je nach Ausführungsbeispiel kann das Druckbegrenzungsventil 108 als Teil einer den Druckbehälter 102 mit dem Steuerventil 104 verbindenden Versorgungsleitung der Bremsanlage 100 realisiert sein. Das Steuerventil 104 ist ausgebildet, um durch entsprechendes Ansteuern zwischen einer Arbeitsstellung und einer Ruhestellung bewegt zu werden. In der in Fig. 1 gezeigten Ruhestellung des Steuerventils 104, in der die Feder 109 beispielsweise eine größere Länge als in der Arbeitsstellung aufweist, ist der Steuerventilanschluss 116 von dem Bremseinrichtungsanschluss 114 fluidisch getrennt. In der Arbeitsstellung sind der Steuerventilanschluss 116 und der Bremseinrichtungsanschluss 114 durch das Steuerventil 104 hingegen fluidisch miteinander verbunden, sodass der durch das Druckbegrenzungsventil 108 bereitgestellte Bremsdruck pb über das Steuerventil 104 zur Bremseinrichtung 110 weitergeleitet wird. Dadurch wird die Bremseinrichtung 110 mit dem Bremsdruck pb beaufschlagt und entsprechend betätigt.

Optional ist das Steuerventil 104 ausgebildet, um den Steuerventilanschluss 116 in der Ruhestellung derart zu sperren, dass eine Weiterleitung des Bremsdrucks pb an den Bremseinrichtungsanschluss 114 verhindert wird. Gemäß dem in Fig. 1 gezeigten Ausführungsbeispiel ist das Steuerventil 104 zusätzlich ausgebildet, um gleichzeitig zum Sperren des Steuerventilanschlusses 116 den Bremseinrichtungsanschluss 114 freizugeben.

Zusätzlich ist die in Fig. 1 gezeigte Steuervorrichtung 102 mit einem optionalen Betätigungseinrichtungsanschluss 118 realisiert, an den eine Betätigungseinrichtung 120 der Bremsanlage 100, etwa eine Fußbetätigungseinheit in Form eines Fußbremsventils, angeschlossen ist. Die Betätigungseinrichtung 120 ist ausgebildet, um den Bremsdruck pb auszusteuern. Hierzu ist die Betätigungseinrichtung 120 beispielsweise mit einer entsprechenden Druckbegrenzung zum Begrenzen eines durch Betätigen der Betätigungseinrichtung 120 erzeugten Drucks auf den Bremsdruck pb realisiert. Das Steuerventil 104 ist ausgebildet, um den Betätigungseinrichtungsanschluss 118 in der Ruhestellung fluidisch mit dem Bremseinrichtungsanschluss 114 zu verbinden, sodass der von der Betätigungseinrichtung 120 bereitgestellte Bremsdruck pb an die Bremseinrichtung 110 weitergeleitet wird. Optional wird der Betätigungseinrichtungsanschluss 118 in der Arbeitsstellung durch das Steuerventil 104 gesperrt. Dadurch kann der Vorratsdruck pv auch im Fall einer automatischen Bremsung, etwa zur Antischlupfregelung oder bei einem ESP-Eingriff, auf den Bremsdruck pb begrenzt werden. Durch das Druckbegrenzungsventil 108 kann eine Druckbegrenzung im Kontext einer automatischen Bremsung zudem sehr kostengünstig realisiert werden.

Beispielsweise kann der Bremsdruck pb zwischen 8 und 10 bar und der Vorratsdruck pv zwischen 12 und 13 bar liegen. Durch den hohen Vorratsdruck pv kann der Druckbehälter 112 entsprechend klein ausgeführt werden. Durch das Druckbegrenzungsventil 108 kann die Bremsanlage 100 vor einem zu hohen Druck geschützt werden.

Die Druckbegrenzungsfunktion kann beispielsweise mithilfe eines federbelasteten Rückschlagventils als Druckbegrenzungsventil 108 in ein Relaisventil integriert werden, wobei das Druckbegrenzungsventil 108 ausgebildet sein kann, um erst ab einem Druck von beispielsweise 3 bar zu öffnen, sodass bei einem Vorratsdruck pv von beispielsweise 13 bar ein Bremsdruck pb von nur 10 bar durchgelassen wird.

Hierzu ist das Druckbegrenzungsventil 108 beispielsweise in einer Versorgungsleitung des Steuerventils 104 angeordnet. Das Druckbegrenzungsventil 108 öffnet beispielsweise erst ab einem Druck von 3 bar, wodurch bei Zuschaltung des Steuerventils 104 vom Vorratsdruck pv 3 bar abgezogen werden, womit der ausgesteuerte Bremsdruck pb um 3 bar geringer als der Vorratsdruck pv ist. Beispielsweise kann somit bei einem Vorratsdruck pv von 12,5 bar ein Druck von 9,5 bar in der Bremsanlage 100 verwendet werden.

Das Druckbegrenzungsventil 108 ist beispielsweise in eine Vorder- oder Hinterachssteuerung im Bereich einer Vorratsversorgung einer Magnetbaugruppe zur Antischlupfregelung integriert. Somit ist es möglich, um über eine Antischlupfregelung (ASR), eine Fahrdynamikregelung (ESP) oder einen Abstandsregeltempomat (ACC) einen um beispielsweise 3 bar reduzierten Vorratsdruck auszusteuern. Damit die Druckbegrenzung auch bei normaler Betätigung der Bremsanlage 100 wirksam ist, kann auch im Bereich der Betätigungseinrichtung 120 eine geeignete Druckbegrenzung eingebaut sein. Dadurch können größere Gradienten in der Relaiseinheit und kürzere Bremswege verwirklicht werden.

Denkbar ist ferner auch ein in den Figuren nicht bildlich dargestelltes Ausführungsbeispiel des hier vorgestellten, bei dem das Steuerventil 104 in beispielsweise zwei separat ansteuerbare Magnetventile (z. B. zwei 2/2-Magnetventile) aufgetrennt ist bzw. diese umfasst. Dann ist über den ersten 2/2-Magneten der Kanal 116 über ein stromlos geschlossenes erstes Magnetventil mit dem Kanal 114 bei bestromtem Zustand verbunden. Das zweite beispielsweise stromlos offene Magnetventil verbindet dann den Kanal 118 in stromlosen Zustand mit dem Kanal 114. Bei bestromtem Zustand ist dieser Kanal verschlossen.

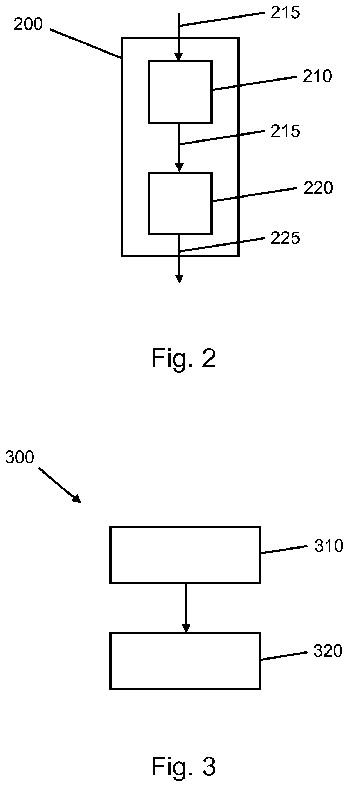

**Fig. 2** zeigt eine schematische Darstellung eines Steuergeräts 200 gemäß einem Ausführungsbeispiel. Das Steuergerät 200 kann beispielsweise im Zusammenhang mit einer vorangehend anhand von Fig. 1 beschriebenen Steuervorrichtung verwendet werden. Das Steuergerät 200 umfasst eine Einleseeinheit 210 zum Einlesen eines von zumindest einem Sensor des mit der Steuervorrichtung ausgestatteten Fahrzeugs bereitgestellten Sensorsignals 215. Bei dem Sensorsignal 215 handelt es sich beispielsweise um ein durch einen Umfeld-, Brems- oder Lenksensor des Fahrzeugs bereitgestelltes Signal. Des Weiteren umfasst das Steuergerät 200 eine Erzeugungseinheit 220, die ausgebildet ist, um unter Verwendung des Sensorsignals 215 ein Ansteuersignal 225 zum Ansteuern des Steuerventils der Steuervorrichtung zu erzeugen.

**Fig. 3** zeigt ein Ablaufdiagramm eines Verfahrens 300 zum Betreiben einer Steuervorrichtung gemäß einem Ausführungsbeispiel. Das Verfahren 300 kann beispielsweise im Zusammenhang mit einer vorangehend anhand der Figuren 1 und 2 beschriebenen Steuervorrichtung durchgeführt oder angesteuert werden. Hierbei wird in einem Schritt 310 das von dem Sensor bereitgestellte Sensorsignal eingelesen. In einem weiteren Schritt 320 wird das Ansteuersignal zum Ansteuern des Steuerventils unter Verwendung des Sensorsignals erzeugt.

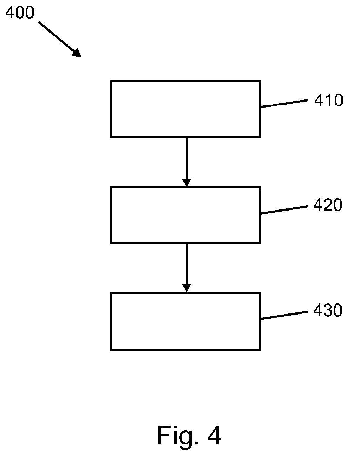

**Fig. 4** zeigt ein Ablaufdiagramm eines Ausführungsbeispiels eines Verfahrens 400 zum Beaufschlagen zumindest einer Bremseinrichtung einer Bremsanlage mit einem Bremsdruck. Das Verfahren 400 kann beispielsweise im Zusammenhang mit einer vorangehend anhand von Fig. 1 beschriebenen Bremsanlage durchgeführt werden. Das Verfahren 400 umfasst einen Schritt 410, in dem der Vorratsdruck an den Druckbehälteranschluss bereitgestellt wird. In einem weiteren Schritt 420 wird der Vorratsdruck durch das Druckbegrenzungsventil auf den Bremsdruck begrenzt. Schließlich wird in einem Schritt 430 das Steuerventil angesteuert, um die Bremseinrichtung mit dem Bremsdruck zu beaufschlagen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Bremsanlage
- 102: Steuervorrichtung
- 104: Steuerventil
- 106: Druckbehälteranschluss
- 108: Druckbegrenzungsventil
- 109: Feder
- 110: Bremseinrichtung
- 112: Vorratsbehälter
- 114: Bremseinrichtungsanschluss
- 116: Steuerventilanschluss
- 118: Betätigungseinrichtungsanschluss
- 120: Betätigungseinrichtung
- 200: Steuergerät
- 210: Einleseeinheit
- 215: Sensorsignal
- 220: Erzeugungseinheit
- 225: Ansteuersignal
- 300: Verfahren zum Betreiben einer Steuervorrichtung
- 310: Schritt des Einlesens
- 320: Schritt des Erzeugens
- 400: Verfahren zum Beaufschlagen einer Bremseinrichtung mit einem Bremsdruck
- 410: Schritt des Bereitstellens
- 420: Schritt des Begrenzens
- 430: Schritt des Ansteuerns

## Patentansprüche

1. Steuervorrichtung (102) zum Steuern einer Bremsanlage (100) für ein Fahrzeug, wobei die Steuervorrichtung (102) folgende Merkmale aufweist:
ein ansteuerbares Steuerventil (104) zum Beaufschlagen zumindest einer Bremseinrichtung (110) der Bremsanlage (100) mit einem Bremsdruck (pb);
einen Druckbehälteranschluss (106) zum Anschließen der Steuervorrichtung (102) an einen Druckbehälter (112) zum Bereitstellen eines Vorratsdrucks (pv); und
**dadurch gekennzeichnet, dass**
ein zwischen dem Steuerventil (104) und dem Druckbehälteranschluss (106) angeordnetes Druckbegrenzungsventil (108) zum Begrenzen des Vorratsdrucks (pv) auf den Bremsdruck (pb).

2. Steuervorrichtung (102) gemäß Anspruch 1, **dadurch gekennzeichnet, dass** das Druckbegrenzungsventil (108) als Rückschlagventil, insbesondere als federbelastetes Rückschlagventil, realisiert ist.

3. Steuervorrichtung (102) gemäß einem der vorangegangenen Ansprüche, **dadurch gekennzeichnet, dass** das Steuerventil (104) als Magnetventil, insbesondere als federrückgestelltes Magnetventil, realisiert ist.

4. Steuervorrichtung (102) gemäß einem der vorangegangenen Ansprüche, **gekennzeichnet durch** einen Bremseinrichtungsanschluss (114) zum Anschließen der Steuervorrichtung (102) an zumindest eine Bremseinrichtung (110) der Bremsanlage (100), wobei das Druckbegrenzungsventil (108) einen Steuerventilanschluss (116) zum Anschließen des Druckbegrenzungsventils (108) an das Steuerventil (104) aufweist, insbesondere wobei das Steuerventil (104) ausgebildet ist, um den Steuerventilanschluss (116) und den Bremseinrichtungsanschluss (114) in einer Arbeitsstellung fluidisch miteinander zu verbinden und/oder in einer Ruhestellung fluidisch voneinander zu trennen.

5. Steuervorrichtung (102) gemäß Anspruch 4, **dadurch gekennzeichnet, dass** das Steuerventil (104) ausgebildet ist, um in der Ruhestellung den Steuerventilanschluss (116) zu sperren und/oder den Bremseinrichtungsanschluss (114) freizugeben.

6. Steuervorrichtung (102) gemäß Anspruch 5, **gekennzeichnet durch** einen Betätigungseinrichtungsanschluss (118) zum Anschließen der Steuervorrichtung (102) an eine Betätigungseinrichtung (120) zum Betätigen der Bremsanlage (100) durch einen Fahrer des Fahrzeugs, wobei das Steuerventil (104) ausgebildet ist, um den Betätigungseinrichtungsanschluss (118) und den Bremseinrichtungsanschluss (114) in der Ruhestellung fluidisch miteinander zu verbinden und/oder in der Arbeitsstellung fluidisch voneinander zu trennen.

7. Steuervorrichtung (102) gemäß Anspruch 6, **dadurch gekennzeichnet, dass** das Steuerventil (104) ausgebildet ist, um den Betätigungseinrichtungsanschluss (118) in der Arbeitsstellung zu sperren.

8. Steuervorrichtung (102) gemäß einem der vorangegangenen Ansprüche, **dadurch gekennzeichnet, dass** das Steuerventil (104) zwei Magnetventile ausweist.

9. Bremsanlage (100) für ein Fahrzeug, wobei die Bremsanlage (100) folgende Merkmale aufweist:
zumindest einen Druckbehälter (112) zum Bereitstellen eines Vorratsdrucks (pv); und
eine an den Druckbehälter (112) angeschlossene Steuervorrichtung (102) gemäß einem der vorangegangenen Ansprüche.

10. Verfahren (400) zum Beaufschlagen zumindest einer Bremseinrichtung (110) einer Bremsanlage (100) für ein Fahrzeug mit einem Bremsdruck (pb), wobei die Bremsanlage (100) eine Steuervorrichtung (102) mit einem elektrisch ansteuerbaren Steuerventil (104), einem Druckbehälteranschluss (106) zum Anschließen der Steuervorrichtung (102) an einen Druckbehälter (112) und einem zwischen dem Steuerventil (104) und dem Druckbehälteranschluss (106) angeordneten Druckbegrenzungsventil (108) aufweist, wobei das Verfahren (400) folgende Schritte umfasst:
Bereitstellen (410) eines Vorratsdrucks (pv) an dem Druckbehälteranschluss (106);
Begrenzen (420) des Vorratsdrucks (pv) auf den Bremsdruck (pb) durch das Druckbegrenzungsventil (108); und
Ansteuern (430) des Steuerventils (104), um die Bremseinrichtung (110) mit dem Bremsdruck (pb) zu beaufschlagen.

## Claims

1. Control apparatus (102) for controlling a brake system (100) for a vehicle, the control apparatus (102) having the following features:
an actuable control valve (104) for loading at least one brake device (110) of the brake system (100) with a brake pressure (pb);
a pressure vessel connector (106) for connecting the control apparatus (102) to a pressure vessel (112) in order to provide a supply pressure (pv); and
**characterised in that**
a pressure limiting valve (108) between the control valve (104) and the pressure vessel connector (106) in order to limit the supply pressure (pv) to the brake pressure (pb).

2. Control apparatus (102) according to claim 1, **characterised in that** the pressure limiting valve (108) is realised as a check valve, in particular as a spring-loaded check valve.

3. Control apparatus (102) according to any of the preceding claims, **characterised in that** the control valve (104) is realized as a solenoid valve, in particular as a spring-returned solenoid valve.

4. Control apparatus (102) according to any of the preceding claims, **characterised by** a brake device connector (114) for connecting the control apparatus (102) to at least one brake device (110) of the brake system (100), the pressure limiting valve (108) having a control valve connector (116) for connecting the pressure limiting valve (108) to the control valve (104), the control valve (104) being configured, in particular, to connect the control valve connector (116) and the brake device connector (114) to one another fluidically in an operating position and/or to disconnect them from one another fluidically in a rest position.

5. Control apparatus (102) according to claim 4, **characterised in that** the control valve (104) is configured to shut off the control valve connector (116) in the rest position and/or to open the brake device connector (114).

6. Control apparatus (102) according to claim 5, **characterised by** an actuating device connector (118) for connecting the control apparatus (102) to an actuating device (120) for actuating the brake system (100) by way of a driver of the vehicle, the control valve (104) being configured to connect the actuating device connector (118) and the brake device connector (114) to one another fluidically in the rest position and/or to disconnect them from one another fluidically in the operating position.

7. Control apparatus (102) according to claim 6, **characterised in that** the control valve (104) is configured to shut off the actuating device connector (118) in the operating position.

8. Control apparatus (102) according to any of the preceding claims, **characterised in that** the control valve (104) has two solenoid valves.

9. Brake system (100) for a vehicle, the brake system (100) having the following features:
at least one pressure vessel (112) for providing a supply pressure (pv); and
a control apparatus (102) according to any of the preceding claims which is connected to the pressure vessel (112).

10. Method (400) for loading at least one brake device (110) of a brake system (100) for a vehicle with a brake pressure (pb), the brake system (100) having a control apparatus (102) with an electrically actuable control valve (104), a pressure vessel connector (106) for connecting the control apparatus (102) to a pressure vessel (112), and a pressure limiting valve (108) which is arranged between the control valve (104) and the pressure vessel connector (106), the method (400) comprising the following steps:
providing (410) of a supply pressure (pv) at the pressure vessel connector (106);
limiting (420) of the supply pressure (pv) to the brake pressure (pb) by way of the pressure limiting valve (108); and
actuating (430) of the control valve (104), in order to load the brake device (110) with the brake pressure (pb).

## Revendications

1. Système (102) de commande pour la commande d'une installation (100) de frein d'un véhicule, dans lequel le système (102) de commande a les caractéristiques suivantes :
une soupape (104) de commande, qui peut être commandée pour l'alimentation en une pression (pb) de frein d'au moins un dispositif (110) de frein de l'installation (100) de frein ;
un raccord (106) de réservoir sous pression pour le raccordement du système (102) de commande à un réservoir (112) de pression de mise à disposition d'une pression (pv) de réserve ; et
**caractérisé en ce que**
une soupape (108) de limitation de la pression est montée entre la soupape (104) de commande et le raccord (106) de réservoir de pression pour limiter la pression (pv) de réserve à la pression (pb) de freinage.

2. Système (102) de commande suivant la revendication 1, **caractérisé en ce que** la soupape (108) de limitation de la pression est réalisée sous la forme d'un clapet antiretour, notamment sous la forme d'un clapet antiretour soumis à l'action d'un ressort.

3. Système (102) de commande suivant l'une des revendications précédentes, **caractérisé en ce que** la soupape (104) de commande est réalisée sous la forme d'une électrovanne, notamment sous la forme d'une électrovanne rappelée par un ressort.

4. Système (102) de commande suivant l'une des revendications précédentes, **caractérisé par** un raccord (114) de dispositif de frein pour le raccordement du système (102) de commande à au moins un dispositif (110) de frein de l'installation (100) de frein, dans lequel la soupape (108) de limitation de la pression a un raccord (116) de soupape de commande pour le raccordement de la soupape (108) de limitation de la pression à la soupape (104) de commande, dans lequel, notamment, la soupape (104) de commande est réalisée afin de relier entre eux fluidiquement, dans une position de travail, le raccord (116) de soupape de commande et le raccord (114) de dispositif de frein et/ou de les séparer l'un de l'autre fluidiquement dans une position de repos.

5. Système (102) de commande suivant la revendication 4, **caractérisé en ce que** la soupape (104) de commande est constituée pour bloquer le raccord (116) de soupape de commande dans la position de repos et/ou pour dégager le raccord (114) de dispositif de frein.

6. Système (102) de commande suivant la revendication 5, **caractérisé par** un raccord (118) de dispositif d'actionnement pour le raccordement du système (102) de commande à un dispositif (120) d'actionnement pour l'actionnement de l'installation (100) de frein par un conducteur du véhicule, dans lequel la soupape (104) de commande est constituée pour relier entre eux fluidiquement, dans la position de repos, le raccord (118) de dispositif d'actionnement et le raccord (114) de dispositif de frein, et/ou pour les séparer l'un de l'autre fluidiquement, dans la position de travail.

7. Système (102) de commande suivant la revendication 6, **caractérisé en ce que** la soupape (104) de commande est constituée pour bloquer le raccord (118) de dispositif d'actionnement dans la position de travail.

8. Système (102) de commande suivant l'une des revendications précédentes, **caractérisé en ce que** la soupape (104) de commande a deux électrovannes.

9. Installation (100) de frein d'un véhicule, dans laquelle l'installation (100) de frein a les caractéristiques suivantes :
au moins un réservoir (112) de pression pour la mise à disposition d'une pression (pv) de réserve ; et
un système (102) de commande, suivant l'une des revendications précédentes, raccordé au réservoir (112) de pression.

10. Procédé (400) d'alimentation d'au moins un dispositif (110) de frein d'une installation (100) de frein d'un véhicule en une pression (pb) de frein, dans lequel l'installation (100) de frein comprend un système (102) de commande ayant une soupape (104), un raccord (106) de réservoir sous pression pour le raccordement du système (102) de commande à un réservoir (112) de pression, et une soupape (108) de limitation de la pression est montée entre la soupape (104) de commande et le raccord (106) de réservoir de pression, dans lequel le procédé (400) comprend les stades suivants :
mise (410) à disposition d'une pression (pv) de réserve sur le raccord (106) de réservoir de pression ;
limitation (420) de la pression (pv) de réservoir à la pression (pb) de frein par la soupape (108) de limitation de la pression ; et
commande (430) de la soupape (104) de commande, afin d'alimenter le dispositif (110) de frein en la pression (pb) de frein.
